# EUROPÄISCHE PATENTSCHRIFT

(11) **EP 0 703 852 B1**
(45) Veröffentlichungstag und Bekanntmachung des Hinweises auf die Patenterteilung: **19.08.1998**
(21) Anmeldenummer: 94926760.3
(22) Anmeldetag: 21.09.1994
(51) Int. Cl.: B28D 1/08

(54) **SEILSÄGEMASCHINE ZUR HERSTELLUNG VON TRENNSCHNITTEN IN BETONKÖRPERN, MAUERN, GESTEIN OD.DGL.**
CABLE SAW MACHINE FOR CUTTING CONCRETE BODIES, WALLS, ROCKS OR THE LIKE
SCIE MECANIQUE A FIL POUR DECOUPER DES CORPS EN BETON, DES MURS, DES ROCHERS OU SIMILAIRES

(30) Priorität: 13.04.1994 CH 1107/94
(43) Veröffentlichungstag der Anmeldung: 03.04.1996
(73) Patentinhaber: HYDROSTRESS AG, CH-8330 Pfäffikon (CH)
(72) Erfinder: BIERI, Hans, jun., CH-8330 Pfäffikon (CH)
(74) Vertreter: Luchs, Willi
(86) Internationale Anmeldenummer: CH9400186
(87) Internationale Veröffentlichungsnummer: WO9528263

(56) Entgegenhaltungen:
- EP-A- 0 279 305
- FR-A- 312 582
- FR-A- 612 372
- PATENT ABSTRACTS OF JAPAN vol. 17, no. 443 (M-1463) 16. August 1993 & JP,A,05 098 813 (CONCRETE KOORING KK) 20. April 1993

## Beschreibung

Die Erfindung bezieht sich auf eine Seilsägemaschine nach dem Oberbegriff des Patentanspruches 1.

Es sind bereits Seilsägemaschinen bekannt, bei denen das Sägeseil in Form einer endlosen Schleife um den zu trennenden Betonkörper od.dgl. geschlungen wird. Mit zunehmender Schnitt-Tiefe muss die Sägeseilschlaufe zur Aufrechterhaltung des Schnittdruckes das Seil ständig nachgezogen werden. Zu diesem Zweck befindet sich die Seilantriebseinrichtung auf einem entlang von horizontalen Schienen fahrbaren Wagen oder Schlitten. Bei grossen zu trennenden Körpern bedingt dies lange Seilschlaufen, einen langen Fahrweg und entsprechend lange Schienen.
In vielen Fällen verhindern indessen gegebene, enge Platzverhältnisse das Auslegen langer Schienen, was die Verwendung solcher Seilsägemaschinen begrenzt.

Mit der Erfindung soll die Aufgabe gelöst werden, eine Seilsägemaschine mit möglichst kompaktem und einfachem Aufbau zu schaffen, die auch bei räumlicher Begrenzung einsetzbar ist.

Diese Aufgabe wird durch die im Kennzeichen des Anspruches 1 genannten Merkmale gelöst.

Durch die Ausbildung des Seilspeichers in Form eines Flaschenzuges gelingt es, den mit zunehmender Schnitt-Tiefe anfallenden Seilvorrat in sehr platzsparender Weise aufzunehmen (siehe z.B. die JP-A-05-098813).

Die Ausführungsform nach der Erfindung besteht darin, dass schräg gestellte Seilumlenkrollen vorhanden sind, welche gestatten, das Sägeseil in unterschiedliche Seillaufebenen umzulenken, sodass die Zahl der Seilstränge und damit die Seilaufnahmekapazität variiert werden kann.

Die Verwendung von zwei parallel steuerbaren Hydraulikmotoren für den Sägeseilantrieb ermöglicht ein langsames Anfahren zu Beginn der Sägeseilbewegung Dadurch lassen sich die auf das Sägeseil einwirkenden Zugkräfte gut beherrschen und Seilbrüche durch Überbeanspruchung namentlich bei Laufbeginn vermeiden.

Zur Anpassung an den fortschreitenden Trennvorgang lässt sich die frei werdende Seilschlaufe von Hand auf unterschiedliche Seilumlenkrollen und damit unterschiedliche Seilstrangzahlen umhängen, was einen besonders kompakten Aufbau der Seilsägemaschine ermöglicht.

In der Zeichnung ist ein Ausführungsbeispiel des Erfindungsgegenstandes dargestellt und wird nachfolgend näher erläutert. Es zeigen:
- Fig.1: eine Seitenansicht einer Seilsägemaschine samt einem zu trennenden Betonkörper
- Fig.2: eine Draufsicht auf die Seilsägemaschine mit zu trennendem Baukörper

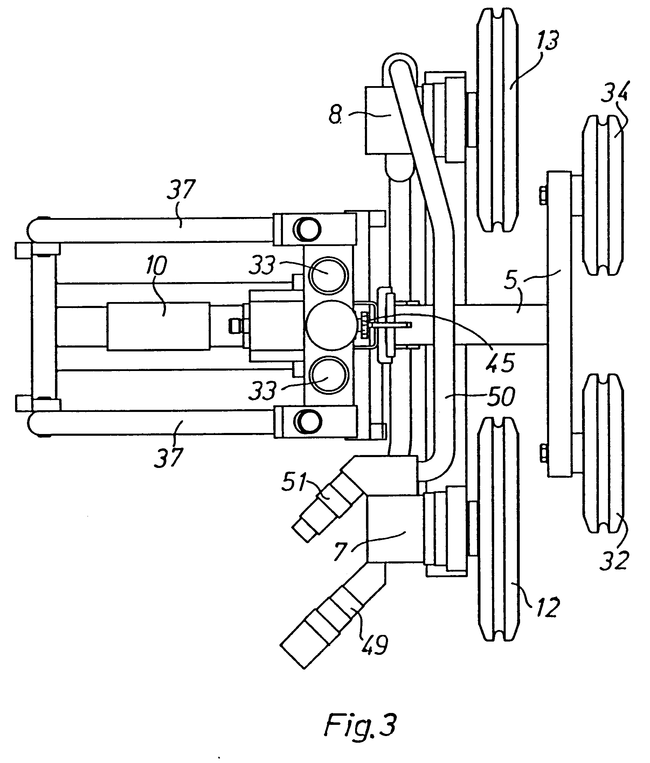

- Fig.3: eine Draufsicht auf den oberen Rollenträger, ohne Sägeseil
- Fig.4: eine Frontansicht der Seilsägemaschine mit einer ersten Art der Seilführung
- Fig.5: eine Frontansicht der Seilsägemaschine mit einer zweiten Art der Seilführung
- Fig.6: eine Frontansicht der Seilsägemaschine mit einer dritten Art der Seilführung

Die Seilsägemaschine ist dazu bestimmt, mittels eines Sägeseiles 1, das üblicherweise mit Diamantsplittern oder andern geeigneten Abrasivstoffen besetzt ist, einen Betonkörper, Mauerwerk, Gestein od.dgl. zu zersägen. Zu diesem Zweck wird das zu einer endlosen Schleife zusammengesetzte Sägeseil 1 um den zu trennenden Körper 2 geschlungen und über Umlenkrollen einer Seilsägemaschine 3 zugeführt. Die Seilsägemaschine 3 enthält ein Gestell 4 auf dem sich ein oberer stationärer Rollenträger 5 und ein unterer beweglich gelagerter Rollenträger 6 befindet. Der Antrieb des Sägeseiles 1 erfolgt durch zwei einlauf- und auslaufseitig angeordnete Hydraulikmotoren 7,8.
Für das Spannen des Sägeseiles 1 zur Erzeugung des Schnittdruckes ist ein auf den unteren, beweglichen Rollenträger 6 einwirkender Kettenantrieb 9 vorhanden, der von einem vom Seilantrieb unabhängigen Hydraulikmotor 10 angetrieben ist.

Eine erste Seilumlenkrolle 12 auf dem oberen Rollenträger 5 ist mit dem Hydraulikmotor 7 antriebsverbunden, eine zweite, auf dem oberen Rollenträger 5 befindliche Seilumlenkrolle 13 ist auf der gegenüberliegenden Seite mit dem zweiten Hydraulikmotor 8 antriebsverbunden.

Auf einem am Fuss des Gestelles 4 lösbar befestigten Träger 11 ist links und rechts je eine weitere Umlenkrolle 14,16 je auf einem Drehteller 17 befestigt. Diese beiden untersten je an einer Schrägstütze 25 drehbar befestigten Umlenkrollen 14,16 bestimmen die Schnittebene des Sägeseiles 1.
Zur Einstellung deren Seillage sind die Träger 11 entlang des Gestelles 4 höhenverstellbar und in der gewählten Stellung arretierbar ausgebildet.

Die Schrägstützen 25 für die Seilumlenkrollen 14,16 sind auf einem Drehteller 17 mit vertikaler Drehachse gelagert und lassen sich mittels Arretierbolzen 21 in gewünschten Positionen arretieren. Auf dem unteren Rollenträger 6 sitzt ferner eine weitere Seilumlenkrolle 20. Diese Seilumlenkrollen 12,13 und 20 liegen in einer ersten Seillaufebene A.

Zur Umlenkung des Sägeseiles 1 in eine zweite Seillaufebene B sind am unteren Rollenträger 6 zwei etwa im Winkel von 45° schräg gestellte Seilumlenkrollen 22,24 vorhanden, die somit zusammen einen rechten Winkel einschliessen, der sich gegen den Betonkörper 2 hin öffnet.
Der untere Rollenträger 6 enthält eine weitere Seilumlenkrolle 26, die sich zusammen mit den beiden auf dem oberen Rollenträger 5 sitzenden Seilumlenkrollen 32 und 34 alle in der zweiten Seillaufebene B befinden.

Das Gestell 4 auf welchem der obere und untere Rollenträger 5,6 sitzen, enthält zwei untereinander parallele zylindrische Stangen 33, die am Gestellfuss um einen horizontalen Bolzen 35 schwenkbar sind.

Zwei parallel schräge Streben 37 sind am oberen Gestellende durch Achsen 39 abgestützt. Das untere Ende der Streben 37 ist mit dem Gestellfuss durch Bodenschienen 41 verbunden. Durch Veränderung der Länge der Bodenschienen 41 oder des Abstützpunktes der Strebe 37 können die Stangen 33 bei Bedarf geneigt werden.

Die Höhenverstellung des beweglichen Rollenträgers 6 erfolgt durch einen Kettenantrieb mit einer endlosen Kette 43. Diese ist oben und unten je um ein Kettenrad 45 geführt. Das obere Kettenrad 45 steht mit einem Antriebsmotor in Verbindung, der vorzugsweise ein Hydraulikmotor 10 mit Anschlüssen 47 ist. Mit diesem Motorantrieb lässt sich somit der untere Rollenträger 6 entlang den Stangen 33 in Richtung des Doppelpfeiles C bewegen.

Die Zufuhr von Drucköl zu den beiden Hydraulikmotoren 7,8 erfolgt durch Anschlussnippen 49,51 und Schlauch- oder Rohrleitungen 50. Der Rückfluss findet über nicht näher dargestellte Rücklaufleitungen statt.

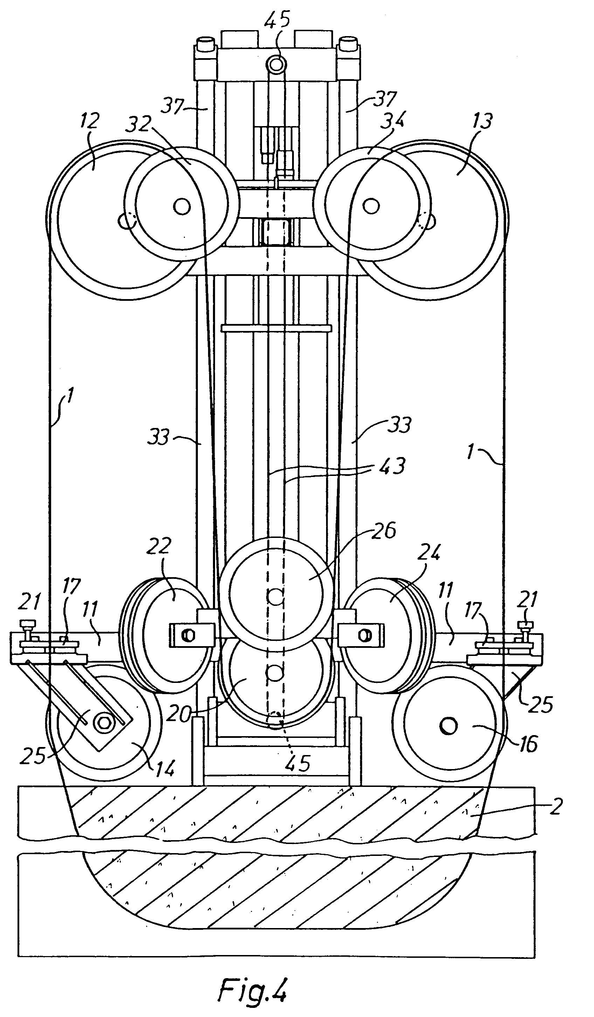

Mit fortschreitendem Sägevorgang wird die frei werdenden Seillänge von Hand um unterschiedliche Umlenkrollen umgehängt, wie das nachfolgend an Hand der Fig. 4 - 6 näher beschrieben wird. Dadurch ergeben sich Flaschenzüge mit Mehrfach-Untersetzung und mit einer unterschiedlichen Zahl von Seilzügen.

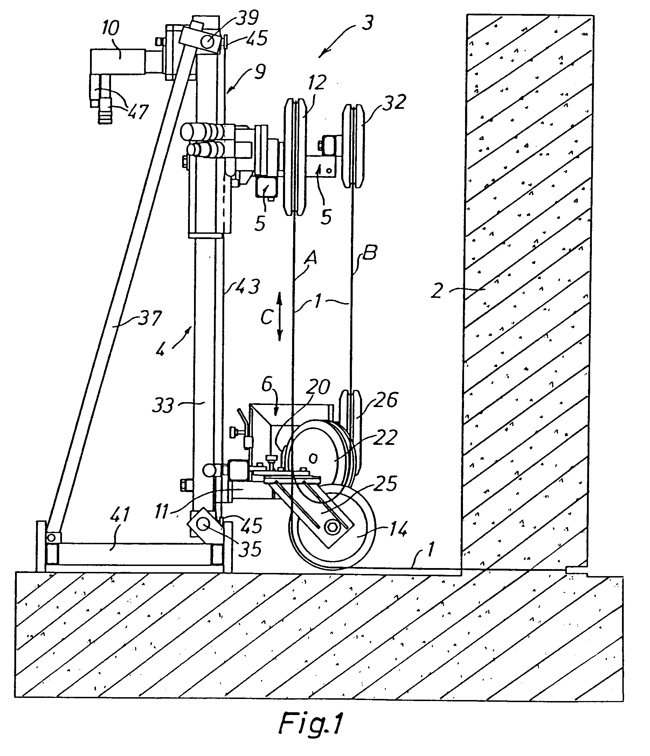

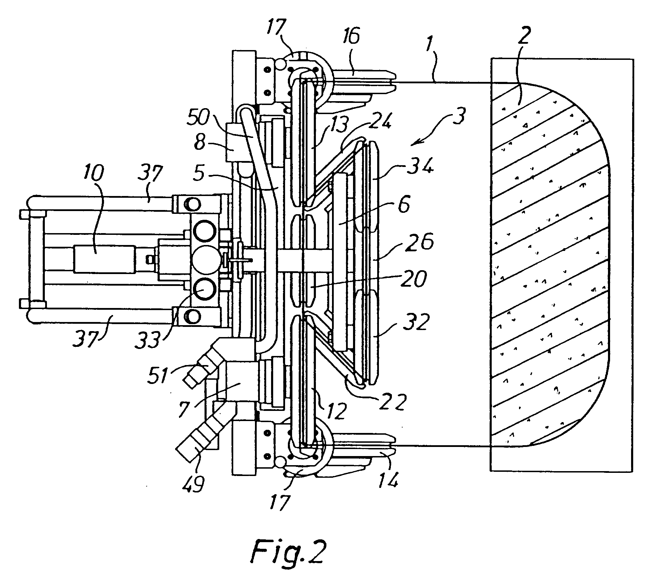

Aus Fig.4 geht eine erste Ausbildung der Seilführung hervor, wobei hier im Gegensatz zu den Fig.1 und 2 die Trennebene nicht waagrecht, sondern senkrecht verläuft. Das um den zu trennenden Baukörper 2 geschlungene Sägeseil 1 läuft über die Umlenkrollen 14, hernach über die erste Umlenkrolle 12 am oberen Rollenträger 5 und sodann über die Umlenkrolle 20 am unteren Rollenträger 6, herauf über die zweite Umlenkrolle 13 des oberen Rollenträgers 5 und schliesslich über die Umlenkrolle 16. Alle Seilstränge befinden sich in der gleichen Seilebene A.

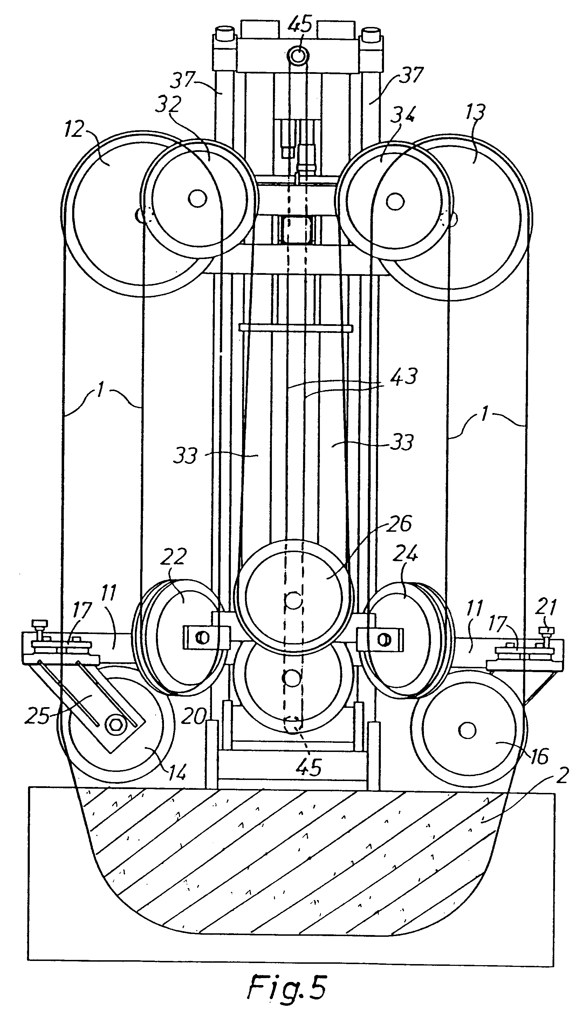

Bei der in Fig.4 dargestellten Ausführungsform befindet sich der untere Rollenträger 6 mit der Umlenkrolle 20 angenähert in seiner untersten Endlage. Zu Beginn des Sägevorganges wird der Rollenträger 6 durch den Kettenzug 43 in seine obere Endlage gebracht. Durch den Antriebsmotor 10 des Kettenzuges 43 wird der Rollenträger 6 langsam abwärts bewegt und dadurch das Sägeseil 1 entsprechend dem Sägefortschritt ständig gespannt wird. Wenn die in Fig.4 dargestellte untere Endlage des Rollenträgers 6 erreicht ist, wird das Sägeseil von Hand umgehängt. Vorgängig wird der Rollenträger 6 durch den Kettenzug 9 in seine obere Endlage bewegt.
Gemäss Fig. 5 ist die Seilführung wie folgt: Umlenkrollen 14,12, erste Schrägrolle 22, Umlenkrollen 32,34, zweite Schrägrolle 24, Umlenkrollen 13,16.
Das Sägeseil 1 läuft somit in den Seilebenen A und B. Die für den Sägevorgang erforderliche Seilspannung wird durch Abwärtsbewegung des Rollenträgers 6 erreicht, auf dem die Schrägrollen 22,24 sitzen.

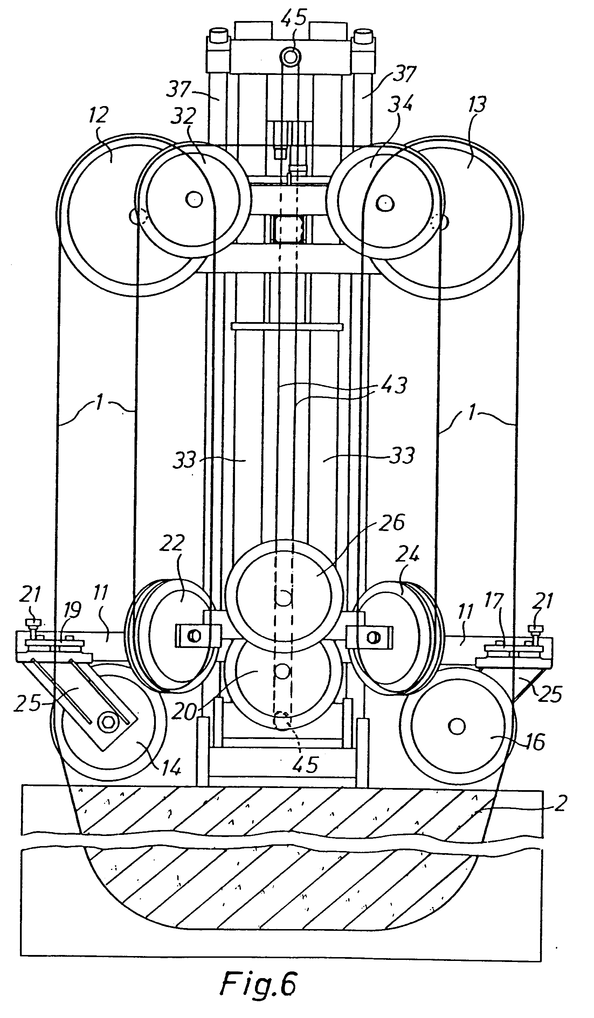

Zu Fig.6 ist die Seilführung nach einem weiteren Umhängevorgang dargestellt, wobei zuvor der Rollenträger 6 in seine obere Ausgangsstellung gebracht wird. Die Seilführung ist nun wie folgt: Rollen 14,12,22,32,26,34,24,13,16. Durch Bewegung des Rollenträgers 6 in Abwärtsrichtung wird das Sägeseil 1 gespannt.

Als Ausführungsvariante könnte an Stelle eines Kettenzuges auch eine parallel zu den Stangen 33 verlaufende Zahnstange und ein in diese eingreifendes, auf dem Rollenträger 6 sitzendes angetriebenes Ritzel vorhanden sein.
An Stelle der bevorzugten vertikalen Lage des Gestelles 4 könnte dieses auch schräg gestellt oder liegend ausgeführt werden.

## Patentansprüche

1. Seilsägemaschine zur Herstellung von Trennschnitten in Betonkörpern, Mauern , Gestein, od.dgl., mit einem mit abrasivem Material bestückten, motorisch angetriebenen Sägeseil, wobei für den aus dem zu trennenden Körper (2) herausragenden Schlaufenteil des Sägeseiles (1) ein Flaschenzug -Seilspeicher vorhanden ist, mit einem auf einem Gestell (4) sitzenden stationären und einem beweglichen Rollenträger (5,6) um deren Umlenkrollen das Sägeseil geschlungen ist und der bewegliche Rollenträger (6) mittels Kraftantrieb (10,45) linear bewegbar ist, dadurch gekennzeichnet, dass sich mindestens auf einem Rollenträger (5,6) Schrägrollen (22,24) zur Umlenkung des Sägeseiles (1) in unterschiedliche Seillaufebenen (A,B) befinden.

2. Seilsägemaschine nach Anspruch 1, dadurch gekennzeichnet, dass der obere Rollenträger (5) als starrer Rollenträger ausgebildet ist und einen ersten Rollensatz mit zwei in Radialrichtung voneinander distanzierten Rollen (12, 13) aufweist zur Seilführung in einer ersten Ebene, auf dem obern Rollenträger (5) ein zweiter Rollensatz mit zwei in Radialrichtung voneinander distanzierten Rollen (32,34) angeordnet ist, deren Rollen (32,34) gegenüber dem ersten Rollensatz einen axialen Abstand haben zur Seilführung in einer zweiten Ebene, der untere beweglich gelagerte Rollenträger (6) einen dritten, schwenkbar gelagerten Rollensatz (14,16) sowie mindestens eine weitere Rolle (26) aufweist und ein schwenkbar ausgebildeter vierter Rollensatz (22,24) vorhanden ist, der auf einem entlang des Gestelles (4) verstellbaren und arretierbaren Träger (11) sitzt.

3. Seilsägemaschine nach den Ansprüchen 1 oder 2, dadurch gekennzeichnet, dass der Seilantrieb durch zwei parallel steuerbare seileingangs- und seilausgangsseitig angeordnete Hydraulikmotoren (7,8) erfolgt.

4. Seilsägemaschine nach einem der Ansprüche 1 bis 3, dadurch gekennzeichnet, dass der bewegliche Rollenträger (6) entlang zweier vom Gestell (4) abgestützten, zueinander parallel verlaufenden Führungsstangen (33) verschiebbar ist und das Gestell (4) um eine am Gestellfuss vorhandene horizontale Drehachse (35) schwenkbar ausgebildet ist.

5. Seilsägemaschine nach einem der Ansprüche 1-4, dadurch gekennzeichnet, dass das Gestell zwei zueinander parallele Stangen (33) oder Führungsschienen aufweist zur Führung des beweglichen Rollenträgers (6).

6. Seilsägemaschine nach einem der Ansprüche 1-5, dadurch gekennzeichnet, dass ein motorisch angetriebener Kettenantrieb (9,43,45) vorhanden ist zur Verstellung des beweglichen Rollenträgers (6).

7. Verfahren, insbesondere zum Betrieb der Seilsägemaschine nach Anspruch 1, dadurch gekennzeichnet, dass der Seilsägevorrat mit zunehmender Schnitt-Tiefe zur Vergrösserung der Seilstrangzahl und damit der Seilaufnahmekapazität des Flaschenzuges von Hand auf Seilumlenkrollen (12,13,22,24,26) in unterschiedlichen Seillaufebenen (A,B) umgehängt wird.

## Claims

1. Rope-type sawing machine for making severing cuts in rock, bodies of concrete, masonry or the like, with a motor-driven saw rope equipped with abrasive material, for the loop part of the saw rope (1) projecting from the body (2) to be severed, there are pulley-block rope store means with a frame (4) and stationary and movably mounted pulleys (5,6), around which the saw rope (1) is looped, the movable pulley carrier (6) being movable linearly by means of a power drive (10,45), characterised in that at least on one pulley carrier (5,6) inclined pulleys (22,24) are provided for deflecting the sawing rope (1) into different rope running planes (A,B).

2. Rope sawing machine according to claim 1, characterised in that the top pulley carrier (5) as a fixed pulley carrier is provided with a first set of pulleys with two from each other radially distanced pulleys (12, 13) for the rope guidance in a first rope plane, oil the top pulley carrier (5) is provided a second set of pulleys with two from each other radially distanced pulleys (32, 34), those pulleys (32, 34) having an axial distance to the first set of pulleys for the rope guidance in a second rope plane, the bottom movably beared pulley carrier (6) is provided with a third set of pulleys (14, 16) pivotally beared and at least one additional pulley (26), and a pivotable arranged fourth set of pulleys (22, 24) is used fastened on a carrier (11) which is adjustable along and detachable fixed on the frame (4).

3. Rope sawing machine according to the claims 1 or 2, characterised in that the rope drive takes place by two parallel controllable hydraulic motors (7,8) arranged on the rope inlet and rope outlet side.

4. Rope sawing machine according to any one of the claims 1 to 3, characterised in that the movable pulley carrier (6) can be moved along two parallel guide rods (33) supported by the frame (4) and the frame can be swiveled around a horizontal axis or rotation (35) provided on the base of the frame.

5. Rope sawing machine according to any one of the claims 1 to 4, characterised in that the frame has two rods (33) or guide rails arranged parallel to each other for the guidance of the movable pulley carrier (6).

6. Rope sawing machine according to any one of the claims 1 to 5, characterised in that the drive takes place by a motor-driven chain drive (9,43,45) for the movement of the pulley carrier (6).

7. Method particularly for operating the rope sawing machine according to claim 1, characterised in that as the depth of the cut increases, to increase the number of rope lines and accordingly the rope storage capacity of the pulley block means, the free sawing rope is hung by hand around various rope deflecting pulleys (12,13,22,24,26) into different rope running planes (A, B).

## Revendications

1. Scie mécanique à fil pour la réalisation de coupes dans des corps en béton, de la maçonnerie, des roches ou similaires, comportant un fil de coupe enrobé d'un matériau abrasif, entraîné par un moteur, où un accumulateur de fil du type à palan est prévu pour la partie de la boucle de fil de coupe (1) qui ressort du corps (2) à couper, comprenant un porte-poulies stationnaire monté sur un châssis (4) et un porte-poulies mobile (5, 6), le fil de coupe étant enroule sur les poulies de renvoi de ceux-ci, et où le porte-poulies mobile (6) peut être déplacé dans un sens linéaire au moyen d'un entraînement de puissance (10, 45),
caractérisée en ce que des poulies inclinées (22, 24) sont montées sur l'un au moins des porte-poulies (5, 6) de manière à renvoyer le fil dans des plans différents (A, B) de circulation du fil.

2. Scie mécanique à fil selon la revendication 1, caractérisée en ce que le porte-poulies supérieur (5) est réalisé en tant que porte-poulies fixe et comporte un premier jeu de poulies comprenant deux poulies (12, 13) espacées l'une de l'autre dans le sens radial, assurant le guidage du fil dans un premier plan, et en ce qu'un deuxième jeu de poulies, monté sur le porte-poulies supérieur (5), comporte deux poulies (32, 34) espacées l'une de l'autre dans le sens radial, où les poulies (32, 34) présentent une distance axiale par rapport au premier jeu de poulies, en vue d'assurer le guidage du fil dans un deuxième plan, en ce que le porte-poulies inférieur mobile (6) comporte un troisième jeu de poulies (14, 15) monté de façon pivotante, ainsi qu'au moins une poulie supplémentaire (26), et qu'un quatrième jeu de poulies (22, 24) à montage pivotant est prévu, qui se situe sur un support (11) pouvant être déplacé et arrêté le long du châssis (4).

3. Scie mécanique à fil selon les revendications 1 ou 2, caractérisée en ce que l'entraînement du fil s'effectue par deux moteurs hydrauliques (7, 8) à commande parallèle, disposés en entrée et en sortie du fil de coupe.

4. Scie mécanique à fil selon l'une des revendications 1 à 3, caractérisée en ce que le porte-poulies mobile (6) peut être déplacé le long de deux barres de guidage (33) prenant appui sur le châssis (4) et s'étendant parallèlement l'une à l'autre, et en ce que le châssis (4) est réalisé de manière à pouvoir pivoter autour d'un axe de rotation horizontal (35) situé au pied du châssis.

5. Scie mécanique à fil selon l'une des revendications 1 à 4, caractérisée en ce que le châssis comporte deux barres (33) ou rails de guidage parallèles l'un(e) à l'autre, pour le quidage du porte-poulies mobile (6).

6. Scie mécanique à fil selon l'une des revendications 1 à 5, caractérisée en ce qu'un entraînement motorisé à chaîne (9, 43, 45) est prévu pour le déplacement du porte-poulies mobile (6).

7. Procédé, en particulier procédé d'utilisation de la scie mécanique à fil selon la figure 1, caractérisé en ce qu'au fur et à mesure que la profondeur de la coupe augmente, la réserve de fil à couper est raccrochée manuellement sur des poulies de renvoi (12, 13, 22, 24, 26) du fil situées dans différents plans de circulation (A, B) du fil, de manière à augmenter le nombre de brins de fil et, de ce fait, la capacité d'accumulation de fil du palan.
